Europäisches Patentamt

European Patent Office

Office européen des brevets

(11) Publication number: **0 027 099**
**B1**

## (12) EUROPEAN PATENT SPECIFICATION

(45) Date of publication of patent specification: **27.12.85**

(51) Int. Cl.⁴: **G 01 N 21/43**

(21) Application number: **80810304.8**

(22) Date of filing: **30.09.80**

(54) **Refractive-index responsive light-signal system.**

(30) Priority: **03.10.79 US 81351**

(43) Date of publication of application:
**15.04.81 Bulletin 81/15**

(45) Publication of the grant of the patent:
**27.12.85 Bulletin 85/52**

(84) Designated Contracting States:
**AT BE CH DE FR GB IT LI LU NL SE**

(56) References cited:
**EP-A-0 000 319**
**DE-A-2 314 827**
**FR-A-2 103 683**
**US-A-3 282 149**
**US-A-3 648 521**
**US-A-3 915 570**

**ELEKTRONIK, vol. 25, no. 8, August 1976, page
93, "Sonde zählt Bläschen in Flüssigkeiten"**

(73) Proprietor: **Stanley Electric Co., Ltd.
2-9-13, Nakameguro
Meguri-ku Tokyo (JP)**

(72) Inventor: **Harmer, Alan L.
13 Bernex-en-Combes
CH-1233 Bernex (CH)**

(74) Representative: **Dousse, Blasco et al
7, route de Drize
CH-1227 Carouge/Genève (CH)**

Courier Press, Leamington Spa, England.

## Description

The present invention relates to an apparatus for providing a light signal representative of the level or of the refractive index of a liquid.

In many processes, it is required to detect changes in the state of a fluid medium. These changes may be either discontinuous (for example presence or absence of liquid) or continuous if related to some physical or chemical properties of the fluid (for example the concentration of a solute in a solution or of one of the components in a mixed fluid, or temperature variations in a fluid). Such detection may be used for various applications such as carrying out measurements, control or testing operations and regulation.

It has already been proposed, when a correlation exists between the characteristics of a fluid medium and its refractive index, to detect the changes in these characteristics by detecting variations of this refractive index by means of various optical methods. Most of these optical methods are based on exploiting the reflection and refraction phenomena which occur near the critical angle. They essentially consist in transmitting light through a transparent light-conducting structure immersed in the fluid medium, so that the light undergoes multiple internal reflections on the walls of the structure. The determination of the intensity of the light thus transmitted by multiple reflections and the sudden variations of this intensity near the critical angle thus permits the determination of the refractive index of the fluid.

To make continuous refractive-index measurements, there are, for example, devices consisting of a straight transparent rod with an opto-mechanical system at one end for injecting a thin beam of light into the rod with a well defined angle of incidence, and of a photo-electric detector at the other end for measuring the intensity of the light thus transmitted through the rod after multiple internal reflections according to a well-defined angle of incidence. After the rod has been immersed into the fluid medium to be measured, the angle of incidence of the beam of light injected into the rod is then lowered continuously while observing intensity of the transmitted light signal. A sudden drop in intensity which occurs when the angle of incidence of the multiple reflections exceeds the critical angle permits to determine the value of this critical angle and hence also the refractive index of the fluid. Devices of this type, however, have the major drawback of being extremely complicated, being given that they require, among other things, a relatively sophisticated light-injection system, since it must provide both a parallel beam of incident light by optical means, and a device for continuously varying the angle of incidence of this beam by mechanical means. Moreover, various known devices for measuring liquid levels are of the type comprising a prism (or cone) placed at the bottom end of a transparent rod inserted in the vessel containing the liquid of which the level is to be determined, a measurement of this level being obtained by injecting light into the top end of the rod and by observing visually the light reflected by the prism back to the top end (this is illuminated by reflected light in the absence of liquid at the level of the prism, and becomes dark in the opposite case).

Devices of this sort have a certain number of drawbacks: firstly, the small number of reflections which occur (simple or double reflection) only allows a low light contrast to be obtained, while the light transmission factor remains relatively low; the structure of such devices has moreover proved relatively complicated. Above all, a major drawback of these devices is to function in only two different fluid states on account of the fixed incidence of light, so that they are hardly suitable for carrying out continuous index measurements and their use thereby remains limited almost exclusively to the detection of changes of state such as level indication.

In order to remedy the above-mentioned drawbacks, it has further been proposed to use devices consisting of simple transparent rods comprising an intermediate U-shaped curved section adapted for being immersed in the liquid to be tested, the refractive index of this fluid being determined by injecting light at one end of the rod and by observing the light transmitted to its other end. In such devices, the curved section of the rod results in passage by refraction into the liquid of an amount of light which is found to be essentially a function of the refractive index of this liquid, so that the quantity of light transmitted to the other end of the rod constitutes a parameter which is characteristic of this refractive index (a device of this type is described for example in the article " A photo-electric refractometer" by E. Karrer and R. Orr — Journal of the Optical Society of America — Volume 36, No. 1 — pages 42 to 46 — January 1946). Such devices appear a priori particularly advantageous because of their great simplicity and low cost, as well as the fact that they may be used in principle for the detection of both discontinuous and continuous changes in the caracteristics of the liquid to be tested. However, these devices have a major drawback of having a very low sensitivity, so that there use as refractometers is quite limited (because of their inability to detect slight variations of the refractive index of the liquid to be tested), while even their use as simple liquid-level indicators is found to be far from satisfactory (because of the low contrast which can be measured).

It has been proposed more recently to provide different modifications of these devices consisting of curved transparent rods, but none of these modifications has led to a notable improvement in sensitivity. Thus, for example, it has been proposed to replace the U-shaped rod by a rod with a curvature of at least 360° (US Patent No. US—A—3,282,149), but these simply serves to linearize the measurement, without notably changing the sensitivity. It has been proposed, for example, to replace the transparent rod by a curved piece of optical fiber (French Patent FR—A—2,130,037) essentially in order to achieve miniaturization of the equipment, but this mere replacement also has practically no effect on sensitivity.

Also known is EP—AI—0000319, which discloses, in Fig. 7, apparatus having the features of the preamble of present Claim 1. Another known device, for indicating liquid level on the basis of a coloured indication, is disclosed in US—A—3648521.

The present invention has for object to avoid the disadvantages of prior art devices and to provide a simple device which has a noticeably increased sensitivity and which can detect both the level of a fluid and variations of its refractive index.

The invention is defined in appended claim 1.

In the present description, the expressions "elongate light-conducting body" or "lightguide" are understood to cover any elongate body capable of conveying light by multiple internal reflections. This encompasses, more particularly, light guides consisting of a transparent rod or of an optical fiber (both being formed so as to comprise an intermediate curved section having the desired profile). A detailed description of such light guides is provided in EP—A—319.

The accompanying drawings illustrate schematically an embodiment of the invention and several optical devices usable therein . In the drawings:

Fig. 1 illustrates a light conducting body having two curvatures arranged to provide an S configuration, and suitable for use in the present invention.

Fig. 2 illustrates another configuration of a light conducting body.

Fig. 3 is a schematic longitudinal view illustrating an embodiment of the apparatus of the invention.

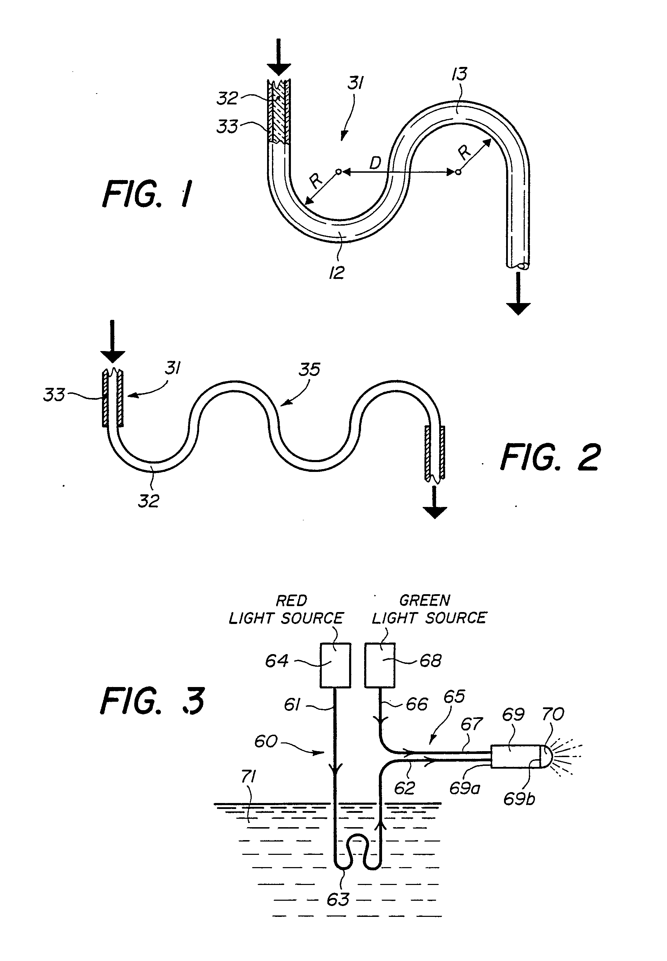

The light conducting body of fig. 1 comprises as a first light conducting body an optical fiber with a double curvature. This optical fiber 31 is composed of a central core 32 surrounded by a cladding of slight thickness 33 along the entire length of the fiber. The geometry of this structure involving two adjoining curvatures 12 and 13 (i.e. contiguous with no intermediate portion between the curvatures) is similar to that disclosed in fig. 4 of EP—A—0000319.

Fig. 2 illustrates a light conducting body similar to that of fig. 5 of EP—A—0000319, wherein the optical fiber 31 constituting the first light conducting body is provided with a curved section 35 comprising four alternating curvatures (instead of two as in fig. 1), this curved section moreover is completely stripped of its cladding 33 (core 32 laid bare).

A color-display device representing an embodiment of the present invention is illustrated in fig. 3 and has been found to be particularly effective in providing a simple color-change indicative of the refraction of the liquid, when employing a multiple-bend conducting body such as discussed above with reference of figs. 1 or 2.

In the apparatus shown in fig. 3, a first light pipe or fiber-optics element 60 comprises an input section or stretch 61 and an output section or stretch 62 connected together by a triply curved sensing or intermediate section 63 in the form of an omega constituting the first light conducting body. This intermediate section is adapted to be immersed in the liquid 71 to be tested.

The free end of the input section 61 is provided with a first illumination source 64 which directs a thin beam of light of a first predtermined color onto the input end of this section. The source 64 may be constituted by a light emitting diode or LED.

The system of fig 3 also comprises a second optical fiber or light pipe 65 constituting a second light conducting body having an input section or stretch 66 and an output section or stretch 67. This second fiber 65 is bent parallelwise to the output section 62 of the first fiber, so that the ends of these sections are connected by a mixer 69 which is also referred to as a randomizer. The second fiber 65 is located entirely outside the liquid 71. The mixer can be an elongated light pipe of a cross-section greater than the total cross-sections of the optical fibers meeting it at its input end.

The input end of the second fiber 65 is provided with a second luminous source 68, e.g. another LED, delivering a beam of light of a second color to the second light pipe, this second color being different from the first one.

As noted, the output sections of the two optical fibers are connected to one end 69a of the mixer or randomizer 69 adapted to provide, at its opposite end 69b, a luminous display in the form of a beam, the color of which results from a mixture or superimposition of the two input colors. The output end 69b of the mixer 69 is provided with a converging lens 70.

The operation of the apparatus as represented is readily apparent. The sensitive part 63 of the first fiber 60 is immersed in the liquid 71 to be tested and the sources 64 and 68 inject the respective beams into the respective fibers 60 and 65 to provide a luminous display at the lens 70 which results from the blend of the constant color intensity beam from light pipe 65 and the variable color intensity beam from light pipe 62 which is a function of the index of refraction of the liquid. The color mix, therefore, will vary as a function of the index of refraction based upon the relationship of the intensities of the two beams.

The most important advantage of the system of fig. 3 is that it provides a highly sensitive immediately visible color change to indicate even minute variations in the index of refraction of the liquid.

Example

The device of fig. 3 is used for testing the state of charge of a conventional lead-acid storage battery. The first light source 64 is constituted by a red LED fed with a constant current of 20 mA, while the second source 68 is a green LED also supplied with a constant current of 20 mA. The resulting beam at the display lens 70 shows a green-yellow color when the battery is completely charged (refractive index 1.378), a light yellow to yellow coloration with complete discharge (refractive index 1.348) and an orange-red coloration when the level of the electrolyte falls below the sensor 63 of the fiber 60. The device of fig. 3 thus serves both as a level indicator and as a refractometer.

## Claims

1. Apparatus for displaying changes in the level of a liquid or variations in the refractive index thereof comprising:

— a first elongate light-conducting body (60) having an input (61), an intermediate section (63) connected to said input section and an output section (62) connected to said intermediate section, said intermediate section being curved to provide a plurality of successive, oppositely oriented U- or V-shaped bends so that said intermediate section is of S- or W-like form, the injection of light into said first body at said input section and immersion of said intermediate section into said liquid resulting in light emerging from said output section at an intensity which varies in dependence upon the refractive index of said liquid;

— a first light source (64) for projecting light into said first body via its input section;

— a second elongate light conducting body (65) having an output section (67) extending parallel to the output section of said first body and display means (70) for displaying light emerging from said first and second bodies, characterized by

— said first light source (64) producing light of a first monochromatic color at said input section for projection through said first body, said second body being shaped and positioned with respect to said first body such that when said intermediate section of said first body is immersed in said liquid no part of said second body is immersed in said liquid;

— a second light source (68) producing light of a second monochromatic color different from said first color and arranged to project light into said second body (65);

— a light mixer (69) connected to said output sections (62, 67) of said first and second bodies for mixing light received therefrom; and said display means (70) being arranged to display light formed in said mixer by the mixing of light from said output sections (62, 67).

2. Apparatus as defined in claim 1, wherein said light sources are light-emitting diodes of different colors.

3. Apparatus as defined in claim 1, wherein said mixer comprises an elongated light-conducting member having a transverse cross-section substantially greater than the cross-sections of said first and second bodies, said output sections of said first and second bodies being attached to the mixer and joining one end of said member.

4. Apparatus as defined in claim 3, wherein the display means comprise a convergent lens mounted at the other end of said member.

## Patentansprüche

1. Vorrichtung zum Anzeigen von Änderungen in der Höhe einer Flüssigkeit oder Änderungen von dessen Brechungsindex, die folgendes umfaßt:

— einen ersten länglichen, lichtleitenden Körper (60) mit einem Eintrittsabschnitt (61), einem mit dem Eintrittsabschnitt verbundenen Zwischenabschnitt (63) und einem mit dem Zwischenabschnitt verbundenen Austrittsabschnitt (62), wobei der Zwischenabschnitt gekrümmt ist, um mehrere aufeinanderfolgende, entgegengesetzt gerichtete U- oder V-förmige Abbiegungen zu bilden, so daß der Zwischenabschnitt eine S- oder W-Form hat, so daß das Einbringen von Licht in den ersten Körper am Eintrittsabschnitt und Eintauchen Zwischenabschnittes in die Flüssigkeit einen Lichtaustritt am Austrittsabschnitt mit einer Intensität ergibt, die sich in Abhängigkeit vom Brechungsindex der Flüssigkeit ändert,

— eine erste Lichtquelle (64), um Licht in den ersten Körper über den Eintrittsabschnitt einzubringen,

— einen zweiten länglichen, lichtleitendern Körper (65) mit einem Austrittsabschnitt (67), der sich parallel zum Austrittsabschnitt des ersten Körpers erstreckt, und mit Anzeigeeinrichtungen (70) zur Anzeige des aus dem ersten und zweiten Körper austretenden Lichtes,

dadurch gekennzeichnet, daß die erste Lichtquelle (64) ein Licht einer ersten monochromatischen Farbe am Eintrittsabschnitt erzeugt, um disses durch den ersten Körper zu projizieren, wobei der zweite Körper hinsichtlich des ersten Körpers so geformt und angeordnet ist, daß, wenn der Zwischenabschnitt des ersten Körpers in die Flüssigkeit eingetaucht ist, kein Teil des zweiten Körpers in die Flüssigkeit eintaucht,

— daß eine zweite Lichtquelle (68) Licht einer zweiten monochromatischen Farbe unterschiedlich von der ersten Farbe erzeugt und das Licht in den zweiten Körper (65) einbringt.

— daß ein Lichtmischer (69) mit den Austrittsabschnitten (62, 67) des ersten und zweiten Körpers verbunden ist, um daß empfangene Licht zu mischen, und daß Anzeigeeinrichtungen (70) vorgesehen sind, um das im Mischer durch Vermischen des Lichtes aus den Ausgangsabschnitten (62, 67) gebildete Licht darzustellen.

2. Vorrichtung nach anspruch 1, dadurch gekennzeichnet, daß die Lichtquellen Licht emittierende Dioden verschiedener Farben sind.

3. Vorrichtung nach Anspruch 1, dadurch gekennzeichnet, daß der Mischer ein längliches, lichtleitendes Glied aufweist, dessen Querschnitt im wesentlichen größer ist als der Querschnitt des ersten und zweiten Körpers, wobei die

0 027 099

Austrittsabschnitte des ersten und zweiten Körpers mit dem Mischer verbunden sind und an ein Ende des Gliedes anschließen.

4. Vorrichtung nach Anspruch 3, dadurch gekennzeichnet, daß die Anzeigeeinrichtung eine Sammellinse am anderen Ende des Gliedes umfaßt.

**Revendications**

1. Appareil pour mettre en évidence des variations de niveau d'un liquide ou des variations de son indice de réfraction, comprenant:

— un premier corps allongé conducteur de la lumière (60) présentant une section d'entrée (61), une section de intermédiaire (63) reliée à ladite section d'entrée et une section de sortie (62) reliée à ladite section intermédiaire, ladite section intermédiaire étant incurvée de manière à présenter, en succession, des courbures en sens inverse orientées en forme de U ou de V, de manière que ladite section intermédiaire affecte une forme de S ou de W, l'injection d'un signal de lumière dans ledit premier corps par ladite section d'entrée et l'immersion de ladite section intermédiaire dans ledit liquide provoquant, en ce qui concerne le signal de lumière émergeant de ladite section de sortie, une variation d'intensité en fonction de l'indice de réfraction dudit liquide;

— une première source de lumière (64) pour projeter de la lumière dans ledit premier corps par sa section d'entrée;

— un second corps allongé conducteur de la lumière présentant une ·section de sortie (67) s'étendant parallèlement à la section de sortie du premier corps et des moyens d'affichage (70) pour mettre en évidence la lumière émergeant des premier des second corps, caractérisé par le fait que

— la première source de lumière (64) fournit une lumière d'une première couleur monochromatique à projeter à travers ledit premier corps à partir de ladite section d'entrée, ledit second corps ayant une forme et une disposition telles, par rapport au premier corps, que lorsque la section intermédiaire du premier corps est plongée dans ledit liquide, il n'y ait aucune partie dudit second corps qui soit aussi plongée dans ledit liquide;

— qu'une seconde source de lumière (68) produisant une lumière d'une seconde couleur monochromatique différente de la première est disposée de manière à projeter de la lumière dans ledit second corps (55);

— qu'un mélangeur de lumières (69) est relié aux sections de sortie (62, 67) desdits premier et second corps pour effectuer le mélange des signaux lumineux issus de ceux-ci et que les moyens d'affichage (70) sont adaptés pour mettre en évidence la lumière formée dans ledit mélangeur par mélange des signaux lumineux issus desdites sections de sortie (62, 67).

2. Appareil tel que défini à la revendication 1, dans lequel lesdites sources de lumière sont des diodes électroluminescentes de couleurs differentes.

3. Appareil tel que défini à la revendication 1, dans lequel ledit mélangeur comporte un membre allongé conducteur de la lumière dont la section transversale dépasse notamment celles desdits premier et second corps, les sections de sorties desdits premier et second corps étant reliées au mélangeur à l'une des extrémités dudit membre.

4. Appareil tel que défini à la revendication 3, dans lequel les moyens d'affichage comportent une lentille convergente fixée à l'extrémité opposée dudit membre.

FIG. 1

FIG. 2

FIG. 3

RED
LIGHT SOURCE

GREEN
LIGHT SOURCE